Europäisches Patentamt

European Patent Office

Office européen des brevets

(11) Publication number: **0 139 398**
**B1**

(12) **EUROPEAN PATENT SPECIFICATION**

(45) Date of publication of patent specification: 27.04.88

(51) Int. Cl.⁴: **A 23 D 3/02**

(21) Application number: 84305757.1

(22) Date of filing: 22.08.84

(54) Margarine products or spreads and method for their manufacture.

(30) Priority: 07.09.83 US 530119

(43) Date of publication of application:
02.05.85 Bulletin 85/18

(45) Publication of the grant of the patent:
27.04.88 Bulletin 88/17

(84) Designated Contracting States:
AT BE CH DE FR GB IT LI LU NL SE

(56) References cited:
EP-A-0 096 631
DE-A-1 792 780
FR-A-1 023 781
US-A-2 526 302
US-A-3 946 122

(73) Proprietor: NABISCO BRANDS INC.
Nabisco Brands Plaza
Parsippany New Jersey 07054 (US)

(72) Inventor: Price, Robert D.
610 North Range Line Road
Carmel Indiana 46032 (US)
Inventor: Sledzieski, William L.
10 Cider Lane
Norwalk Connecticut 06851 (US)

(74) Representative: Thomas, Roger Tamlyn et al
D. Young & Co. 10 Staple Inn
London WC1V 7RD (GB)

Courier Press, Leamington Spa, England.

## Description

### Technical field

The present invention relates to a process for preparing a water-in-oil emulsion containing at least 70% fat by weight suitable for use as margarine or a butter substitute or spread and, more particularly, to a process for preparing margarine which closely simulates the functional, textural and organoleptic properties of "natural" (i.e., creamery) butter.

### Background of invention and background art

In the now "standard" method for making margarine, an emulsion containing about 80% by weight of fat, in which an aqueous component (e.g., milk, whey, milk solids, water) is dispersed, is chilled in a closed tubular scraped-surface heat exchanger (typically referred to as an "A" unit). During the chilling and scraping, many small fat crystal nuclei form. The chilled emulsion is typically then treated in a static unit or resting tube (referred to as a "B" unit) where crystallization continues, or in a working "B" unit where large fat crystals are broken up into smaller ones. Finally, the product is packaged in tubs, in stick form, as prints, etc. according to desired end usage.

An extraordinary degree of effort has been expended in the art with respect to margarine manufacture for the purpose of improving various properties of the margarine such as its mouthfeel, taste, frying characteristics, flow characteristics, spreadability and the like. Most of these efforts have been aimed at preparing margarines which more closely simulate butter (although a number of margarine products are deliberately formulated and prepared to be dissimilar from butter with respect to certain properties such as spreadability). These efforts involve, among others, choice of particular fats and aqueous components, utilization of particular emulsifiers, anti-spattering agents, colorants and flavorants, and variations in emulsification and crystallization techniques. While a number of substantially acceptable products have resulted from these efforts, research continues in attempts to still further optimize these products and processes and produce margarines which closely simulate desired properties of butter.

In the manufacture of butter, cream is separated from milk by centrifugation. The cream typically contains from 30% to 60% by weight of fat (e.g., 40—45% by weight) dispersed in the aqueous phase. The cream is ripened to develop the flavor properties and is then churned at from 10°C to 16°C. During churning, the oil-in-water emulsion (cream) is converted to a water-in-oil emulsion by reason of the fact that the fat globules in the cream coalesce as a consequence of the churning action and eventually become the continuous phase, in which aqueous components are dispersed. As a result of the phase inversion, the emulsion has a much lower capacity for holding aqueous material; accordingly, a significant quantity of the original aqueous phase components simply separate out from the mixture and are drained off (as buttermilk) from the butter in the churn. The butter, now containing about 80 to 85% by weight fat, is then generally washed with water (particularly in batch churning processes, but not necessarily required in continuous churning equipment) to remove adhering milk solids. The butter is then salted, worked and packaged according to desired usage, typically in stick form.

As is apparent from the foregoing description, the standard processes for making margarine differ considerably from those processes for making creamery butter. In considering methods for preparing more "butter-like" margarines, it might perhaps be thought that processes more closely akin to those used for making creamery butter would be of advantage. However, the research which has been directed to this approach not only has been scant, but also not proved capable of providing acceptable products.

In U.S. Patent No. (US—A—) 1,403,405, the preparation of "artificial" butter is proposed wherein butter fats are centrifugally extracted from whole milk and the resultant skimmed milk then mixed with various vegetable or animal fats. In order to overcome difficulties in duplicating the emulsified state of fats in natural whole milk, the skimmed milk is neutralized with alkaline reagents prior to the fat addition. The so-prepared milk substitute is then treated to separate a "cream" therefrom which is churned into butter.

U.S. Patent No. (US—A—) 1,965,490 describes a process for making margarine wherein an emulsified mixture of lecithin, milk and margarine fats (approximately 50 to 75% by weight fat) is churned to form butter. U.S. Patent No. (US—A—) 2,526,302 describes a process wherein a mixture of margarine fat and milk is transformed into a stable emulsion of high fat concentration by exposing the mixture to direct steam treatment so as to alter the milk proteins to orient them to the surface of the fat globules. The emulsion is then churned into butter.

In U.S. Patent No. (US—A—) 3,716,378, vegetable or animal fats are emulsified with skimmed milk obtained in a manner so as to possess an increased content of "membrane substances" (protein phospholipoid complexes and triglyceride fractions). This cream-like emulsion is then churned into a butter product.

As has been recognized by certain workers in this art, processes such as described above, wherein, as in butter processes, oil-in-water emulsions are converted to water-in-oil emulsions, are far from satisfactory in making margarine or butter substitutes, notwithstanding their more "natural" approach. See, e.g. U.S. Patent Nos. (US—A—) 2,575,874 and (US—A—) 3,946,122. Despite postulation that such processes should result in products more nearly simulating, e.g., the consistency and texture of butter, these results have not, to date, been attained to any satisfactory degree sufficient to warrant departure from the standard direct water-in-oil emulsion processes for making margarine.

# 0 139 398

Statement of the invention

The present invention provides a process for preparing a water-in-oil emulsion containing at least 70% fat by weight suitable for use as margarine or a butter substitute or spread, comprising:

(a) preparing an intimate mixture comprising melted fat, aqueous milk ingredients and an emulsifier component;

(b) homogenizing said mixture at a pressure of up to 3000 psig ($20.7 \times 10^6$ Pa) to form a liquid semi-stable oil-in-water emulsion therefrom containing from 30% to 60% fat by weight;

(c) cooling said semi-stable oil-in-water emulsion to below 50°F (10°C) while maintaining it in liquid form;

(d) subjecting said semi-stable oil-in-water emulsion to mechanical churning to effect inversion thereof to a water-in-oil emulsion containing at least 70% fat by weight, said semi-stable oil-in-water emulsion being sufficiently stable to withstand separation and phase inversion during storage and handling at temperatures of 50°F (10°C) or below prior to mechanical churning and to withstand phase inversion within the first five minutes of churning, and sufficiently unstable to undergo phase inversion in less than twenty minutes of churning, said churning periods being calculated on the basis of a rotational speed of the mechanical churn of about 30 rpm; and

(e) removing excess free liquid from the water-in-oil emulsion.

As hereinafter described in detail, the invention provides:

1) a process for preparing butter substitutes or spreads (e.g., margarine) which closely simulate desired properties of creamery butter;

2) a process for preparing margarines possessing a texture closely simulating that of creamery butter; and

3) a process for preparation of margarine by the inversion, through churning, of an oil-in-water emulsion into a water-in-oil emulsion.

In the processes hereinafter described in detail, a semi-stable oil-in-water emulsion, containing from 30% to 60% fat by weight, is prepared by mixing together melted fats with an aqueous milk component and then homogenizing the mixture at a pressure of up to 3000 pounds per square inch (gauge) ($20.7 \times 10^6$ Pa). The semi-stable emulsion is then cooled to at least 50°F (10°C) preferably to 35—40°F (1.7—4.4°C) and subjected to mechanical churning, for a period of time not in excess of 20 minutes, so as to bring about the formation of solidified and coalesced fat globules and the inversion of the emulsion to a water-in-oil emulsion, containing at least 70% oil (fat) by weight. Excess liquid is drained from the product and the product then worked, salted, etc. to produce a spread having about 70% fat by weight, preferably a margarine containing about 80% fat by weight.

Particularly where the churning is performed in a batch churning apparatus, the inverted product, after drainage of excess liquid, preferably is washed (mixed) with water at a temperature below 50°F (10°C) (preferably 35—40°F (1.7—4.4°C)), following which excess liquid is again drained. Thereafter, the product is worked, salted, etc. as above noted.

A number of important features have been identified which enable the production of products such as margarine through a churning process without need to resort to the elaborate means suggested by those few art workers who have considered such a process and which produces a product of highly acceptable, "butter-like" texture and mouthfeel. Thus, for example, it has been found necessary to prepare the oil-in-water emulsion from ingredients, and in a manner, which results in an oil-in-water emulsion which is "semi-stable" i.e., which is sufficiently stable to resist break-up of the emulsion in normal handling or storage prior to churning or after only a slight degree of churning, but which is not so stable as to require excessive churning in order to break the emulsion and form the desired water-in-oil emulsion. In addition, it has been found that in those cases where water is used to wash the churned product, the washing should be performed at very low temperatures, i.e., the water either should be extremely cold to start, and/or the washing vessel should be water-cooled (e.g., jacketed) during this washing and any other subsequent working of the product in the churn.

In one embodiment of the invention, a margarine or spread is produced, containing at least about 70% fat by weight, by means of a phase inversion process, wherein the fat content of the final water-in-oil product which is attributable to phase inversion comes solely from the added fat and not from inversion of any milk ingredient. In other words, the continuous fat phase of the final water-in-oil product results from the added fat, while any fats associated with the milk ingredient, if present at all, are part of the dispersed phase (e.g., if whole milk—in which the fats are contained as an oil-in-water emulsion—is used as all or part of the aqueous milk ingredient, the emulsion (milk) is not inverted during processing and the fats therein remain as part of the milk, which in turn is in the dispersed phase of the final product). In the typical case, the aqueous milk ingredient(s) will be per se essentially fat-free so that the only fat in the final product is attributable to the added fat in the original mixture. In other cases, however, the milk ingredient can be fat-containing (e.g., whole milk, cream), but the processing conditions are such that these fats substantially remain with the dispersed phase, with the milk ingredient.

Detailed description

In accordance with the process of this invention, an emulsion of the oil-in-water type is first prepared from melted fat ingredients and aqueous milk components.

3

The term "fat" as used herein is intended to include all edible, fatty acid triglycerides, regardless of origin, which, when combined with aqueous milk components to provide oil-in-water emulsions having from 30% to 60% by weight fat, permits such emulsions to be liquid at temperatures of 35°F to 50°F (1.7—10°C). Thus, the term "fat" includes suitably processed (e.g., hydrogenated, fractionated, interesterified) vegetable oils and animal fats. Typical of the vegetable oils which are included are the usual vegetable oils such as soybean oil, corn oil, coconut oil, cottonseed oil, peanut oil, safflower oil, palm kernel oil, sunflower oil, palm oil and rapeseed oil. Preferred fats include unhydrogenated or partially hydrogenated vegetable oils and mixtures of these.

As used in this invention, the term "liquid" is used in its normal sense to mean that the product in question will flow under its own weight and includes viscous products and compositions.

The aqueous milk ingredients for use in the present invention include whole milk, whey, skimmed milk, buttermilk, milk solids reconstituted with overt water addition, and the like, as well as cultured, ripened or sweetened counterparts of such products. Typically, the aqueous milk ingredients will comprise, at least in part, a ripened milk product so as to assist in the provision of a "butter-like" flavor to the final margarine product or spread. Any remaining aqueous milk ingredients may be selected from the above-listed milk products or mixtures thereof.

The fat and aqueous milk components are combined in proportions which will result in oil-in-water emulsions having a total fat content of from 30% to 60% by weight. Accordingly, in those situations where mixtures containing whole milk or cream are utilized, and wherein the processing conditions are such that release of fats from the milk, and their incorporation into the final product, is achieved, less added fat is required in order to obtain a predetermined overall fat content within the above range than will be the case for mixtures which employ only skimmed or low-fat milk products as the aqueous milk ingredients.

The mixture of melted fat and aqueous milk ingredients may also include additional ingredients such as colorants, flavorants and the like to achieve particular desired properties, as well as emulsifiers as discussed in more detail below.

An important feature of the present invention is the provision of a "semi-stable" oil-in-water emulsion for churning. In the context of this invention, "semi-stable" is used to define an oil-in-water emulsion which is liquid and (a) sufficiently stable to resist water or fat separation and phase inversion during storage at temperatures of 50°F or below, during typical handling procedures, at such temperatures and during a churning period of up to about 5 minutes; and (b) not so stable as to resist inversion to a water-in-oil emulsion through mechanical churning in less than 20 minutes at conventional rotational churning speeds (e.g., 30 r.p.m.). Achievement of the desired semi-stable emulsions involves appropriate choice of fats and aqueous milk components, appropriate choice of homogenization, conditions and appropriate choice of emulsifiers, as discussed in more detail hereinafter.

Preparation of the semi-stable oil-in-water emulsion to be churned, containing from 30% to 60% fat by weight, involves the mixing of fat, aqueous milk ingredients and other optional ingredients, with an emulsifier component, and subsequent homogenization of the mixture at pressures of up to 3000 psig (20.7×10⁶ Pa) preferably in the range of from 500 to 1000 psig (3.4—6.9×10⁶ Pa), at temperatures at which the fat is liquid.

The emulsifier component is chosen so as to result in oil-in-water emulsions having the desired semi-stable characteristics for particular fat and milk ingredients and processing conditions, and so as to result in final inverted water-in-oil emulsion products which are sufficiently tightly emulsified so as not to easily release water at conditions of use and storage and so as to have a desirable mouthfeel in the sense of not breaking down too rapidly when eaten. Mixtures prepared without emulsifiers generally do not possess the requisite stability to withstand separation during storage and handling, to withstand phase inversion during the initial phases of churning and to form sufficiently "tight" final emulsion products. In some cases, however, proteins inherently contained in milk ingredients which might be employed in making the emulsion may contribute sufficient emulsification so as not to require the need for overt addition of emulsifier. On the other hand, use of particular emulsifiers or high levels of emulsifiers result in oil-in-water emulsions which require a degree of churning to effect inversion which, as discussed hereinafter, may be so extensive as to adversely affect desired textural attributes of the final margarine product.

The emulsifier component may comprise one or more emulsifiers and will preferably comprise either a material such as lecithin or a lipophilic emulsifier selected from the group consisting of mixed fatty acid monoglycerides; mixed fatty acid diglycerides; mixtures of fatty acid mono- and diglycerides; lipophilic polyglycerol esters, such as glyceryl monooleate, glyceryl dioleate, glyceryl monostearate, glyceryl distearate, glyceryl monopalmitate and glyceryl dipalmitate; lactylated esters such as glyceryl-lacto esters of fatty acids; propylene glycol esters, such as propylene glycol monostearate, propylene glycol monopalmitate and propylene glycol monooleate; sorbitan esters such as sorbitan monostearate, sorbitan trioleate, sorbitan tripalmitate, sorbitan tristearate, and sorbitan sesquioleate; fatty acids or their soaps such as stearic acid, palmitic acid and oleic acid; and mixtures thereof.

Hydrophilic emulsifiers such as polyoxyethylene (20) sorbitan monostearate (known as polysorbate 60 and commercially available under, e.g., the trade name Tween 60 from ICI-Atlas) or polyoxyethylene (20) sorbitan monooleate (polysorbate 80; Tween 80 from ICI-Atlas) can be used as part of the emulsifier system of the present invention; however, use of such emulsifiers generally must be carefully controlled since their

4

tendency is to render the oil-in-water emulsion more stable than is desired to achieve the beneficial effects of the present invention.

Typically, the emulsifier component will be employed at levels of from 0.1% to 4.0% by weight of the overall mixture; however, the ultimate criterion for usage levels is the production of the requisite semi-stable oil-in-water emulsion.

After preparation of the mixture of melted fat, aqueous milk ingredients, emulsifier and other optional ingredients (which mixture can be referred to as a "rough" emulsion), the final semi-stable oil-in-water emulsion is prepared by homogenizing the mixture at a pressure of up to 3000 psig (20.7×10⁶ Pa) generally in the range of from 500 to 1000 psig (3.4—6.9×10⁶ Pa). Any of the typical homogenizers or colloid mills effective for dairy purposes can be employed in this process, such as a Manton-Gaulin homogenizer or a Cherry Burrell homogenizer.

The mixture of ingredients preferably is homogenized at a temperature of up to 160°F (71.1°C) more typically in the range of from 100°F to 130°F (37.8—54.5°C).

Homogenizing pressures above about 3000 psig (20.7×10⁶ Pa) generally result in the formation of oil-in-water emulsions which are too stable for purposes of the present invention; however, such pressures can be employed where the ingredients of the emulsion have been chosen to produce the required semi-stable emulsion even at such pressures.

In preparing oil-in-water emulsions having the required semi-stable character for use in the present invention, it has been found that whole milk generally is desirably used as at least a portion of the aqueous milk ingredients in that it assists in good butter-like flavor development and texture. Where fat from added milk or cream is desired to be incorporated into the final water-in-oil product, however, consideration should be given to the quantity of whole milk which is employed in forming the emulsion. Since whole milk (or natural cream) itself is a very stable oil-in-water emulsion, utilization of, and reliance upon, too much whole milk or cream may render the overall oil-in-water emulsion excessively "stable" since too long a churning time will be required to invert the natural emulsion, regardless of whether the fat, other milk ingredients and emulsifier system are otherwise chosen to produce an oil-in-water emulsion of the desired semi-stability. Generally, fats contributed by whole milk or cream should constitute less than 25% by weight of the fat content of the oil-in-water emulsion which is eventually churned.

In preparing the semi-stable oil-in-water emulsion, the fat components and aqueous milk components typically will be separately prepared and separately blended prior to their admixture. Generally, the emulsifiers will either be dissolved in the melted fat or will be predispersed in a portion of the liquid fat. Colorants, flavorants, vitamins and other optional ingredients also will typically be separately mixed in the liquid fat components prior to admixture with aqueous milk ingredients.

Following homogenization, the semi-stable oil-in-water emulsion, containing from 30% to 60% fat by weight, is similar to natural cream in liquidity and other characteristics. The emulsion is cooled to below 50°F (10°C) and preferably below 40°F (4.4°C) while remaining liquid (viscous), for admission to the mechanical churner.

During the churning operation, the semi-stable oil-in-water emulsion is broken and inverted to an emulsion wherein the oil is the continuous phase. The water-in-oil emulsion so prepared will have an oil content of 70% or above by weight and contains popcorn-like size aggregates of coalesced fat particles.

The excess aqueous ingredients which are no longer capable of being retained in an emulsified state within the high fat water-in-oil emulsion are drained from the churn and are similar in taste and fat content to buttermilk. This buttermilk may be utilized as part of the aqueous milk ingredients employed in formation of the original oil-in-water emulsion, sold as a buttermilk substitute, employed in the preparation of other dairy substitutes or discarded.

Where products such as margarine or spreads are sought to be made by phase inversion, it is essential that the oil-in-water emulsion to be churned be cooled to a point where the fat can solidify. Since the preparation of the oil-in-water emulsion involves high temperatures (e.g., for melting the fat and pasteurizing any milk ingredients), a substantial period of time may be required to achieve the requisite cooling before churning, during which time the oil-in-water emulsion must be stable. In oil-in-water emulsions containing greater than 60% fat by weight, the steps which must be taken to achieve such stability (e.g., high emulsifier levels) generally result in emulsions which are difficult to break within reasonable churning times and which may produce final products having an undesirable mouthfeel. Thus, while utilization of high fat oil-in-water emulsions for churning will result in a smaller quantity of aqueous ingredients being released upon phase inversion (thereby perhaps providing an economic advantage if the released aqueous ingredients are not suitable for re-use and must be discarded), it has been found that any such economic advantage is offset by poor final product properties. In other words, emulsions of this type simply do not permit the range of stability (semi-stability) which has been found essential for the production of quality margarine or other spreads through phase-inversion churning.

As earlier noted, the churning operation is conducted such that the semi-stable oil-in-water emulsion is inverted to a water-in-oil emulsion after no more than 20 minutes of churning at conventional rotational churn speeds (basis, 30 r.p.m.). The formulation of the oil-in-water emulsion to be sufficiently stable to resist separation during normal storage and handling, will generally result in at least 5 to 10 minutes of churning being required in order to achieve the requisite fat particle aggregation and phase inversion.

When more than 20 minutes of churning (basis, 30 r.p.m.) is required to effect phase inversion, it is

5

**0 139 398**

found that the final margarine product fails to simulate creamery butter in certain important respects, most notably texture and mouthfeel. This undesirable result may be due to a number of factors. For example, the excessive churning/agitation prior to phase inversion may somehow alter the emulsive distribution of components in the oil-in-water emulsion in a manner such that when phase inversion occurs, the resultant water-in-oil product lacks the typical texture of creamery butter and lacks the requisite butter-like mouthfeel characteristics and coolness. It has been determined that the upper limit on churning time should be on the order of 20 minutes prior to phase inversion, based upon a churn rotational speed of 30 r.p.m. However, it may be possible to exceed this limit and still produce acceptable margarine or other products through various formula modifications and the like.

The particular churn or churning apparatus employed for practice of the present invention is not especially critical so long as sufficient agitation, lifting and dropping of the emulsion is effected (but not so violent as to cause significant air incorporation or foaming), and so long as means are provided for facilitating liquid removal, etc. The churn may be such as to be operable on a continuous or semi-continuous basis or on a batch scale.

Particularly for batch processing, it will be found necessary to subject the inverted product (after liquid drainage) to washing to remove adhering solids from the product. Where such washing is required or desired, an important feature of the present invention is that such washing be performed at very low temperatures, i.e., by using cold (35°F to 45°F=1.7—7.2°C) wash water added directly to the product (e.g., in the churn itself or other suitable vessel) and/or by cooling the apparatus *per se* (for example, using cold water or other fluid in a jacketed vessel). In either case, the washing should be such so as not to permit the product to warm above 50—55°F (10—12.8°C). The direct water wash parallels techniques used in making creamery butter, but the temperature at which this is conducted must be significantly lower than that employed in butter processes in order to maintain the desired texture and mouthfeel achieved in the controlled phase-inversion process and to avoid the possibility of incorporation of excessive moisture in the product. More than one washing is not preferred, but can be employed if necessary.

After the washing step, free water or liquid is again removed from the water-in-oil emulsion. By "free" water or liquid is generally intended to mean water or liquid which can easily be removed from the emulsion (e.g., simply by draining) without excessive working (e.g., pressing). Thereafter, the product is worked in the customary manner to introduce salt, additional water, etc. so as to make a suitable margarine or other type of product, and then packaged in any appropriate manner. Flavors may advantageously be added after the washing step if it is found that desired flavors have been lost with the excess aqueous liquid resulting from phase inversion or with the drained wash water.

As will be apparent, the product of the present invention need not be "margarine" as such but can constitute a butter substitute or spread which does not in one or more respects (e.g., fat content) meet the standards of identity established for margarine. Generally, however, the water-in-oil final product will have a fat content of at least 70—80% by weight.

The invention is further described with reference to the following, non-limiting examples.

Example I

Twenty-five (25) gallons (0.095 m³) of cultured homogenized whole milk was mixed with an equal amount of skimmed milk and heated to 140°F (60°C) in a jacketed mixing vessel (approx. one hour to achieve heating). To this mixture, the following oil mixture was slowly blended in:

| | |
|---|---|
| Blend of partially hydrogenated soybean and cottonseed oil (m.p. 35°C, 95°F) | 213.8 pounds (97 kg) |
| Pureco 92 (coconut oil, Wiley m.p. 33°C, 92°F) | 37.7 pounds (17.1 Kg) |
| Lecithin | 245 grams |
| Vitamin color mix | 8.8 grams |
| Flavor | 4.98 grams |

The mixture was homogenized in a two-stage Manton-Gaulin homogenizer at 140°F (60°C) at 1000 psig (6.9×10⁶ Pa) for the first stage and 500 psig (3.4×10⁶ Pa) for the second stage. The oil-in-water emulsion contained oil droplets ranging in size from about 6 to 10 μm in diameter.

The homogenized mix was cooled to 35°F (1.7°C) and admitted to a rotary baffled churn rotating at 30 r.p.m. After churning for 8—10 minutes, a water-in-oil emulsion was formed containing aggregated fat globules of popcorn size. After draining excess liquid from the churn, wash water at a temperature of about 35°F (1.7°C) was added to the churn and the churn rotated for 5 minutes while spraying 35°F (1.7°C) water on the churn shell. Excess liquid was then drained from the churn and a brine solution was worked into the remaining product to achieve a margarine containing 80.2% fat and 1.5% salt by weight.

Example II

Twelve and one-half (12.5) gallons (0.0475 m³) of cultured skim milk was mixed with an equal amount of skim milk and heated to 140°F (60°C) in a jacketed mixing vessel. The mixture was cooled to 110°F (43.3°C) upon which 125 pounds (56.8 Kg) of an oil mixture of the composition of Example I (having added thereto 0.1% by weight polysorbate 80 (Tween 80K®) was slowly blended in.

6

0 139 398

The mixture was homogenized at 110°F (43.3°C) in a single-stage homogenizer at a pressure of about 750 psig (5.18×10⁶ Pa) and then refrigerated and cooled to 35°F (1.7°C). The cooled mixture was churned in a rotary, baffled churn (30 r.p.m.) for fifteen minutes to produce a water-in-oil emulsion containing popcorn-size aggregated fat globules. The product was drained, ice water was added to the churn, and the churn rotated for five minutes. After draining the free wash water, a brine solution was worked into the remaining product by addition of the solution to the product in the churn and rotation of the churn while ice water was cascaded over the churn surface.

Example III

Skim milk (12.5 gallons=0.0475 m³) was pasteurized at 160°F (71°C) for one minute and cooled to 130°F (54.5°C). Twelve and one-half gallons (0.0475 m³) of cultured skim milk (titratable acidity, 0.70% as lactic acid) was added to the skim milk along with 125 pounds (56.8 Kg) of an oil mixture having the composition set forth in Example I (having added thereto 145 grams Durem 117K, a mono- and di-glyceride emulsifier available from the Durkee Company).

The mixture was agitated and adjusted to 110°F (43.3°C), homogenized in a single-stage Gaulin homogenizer at 1000 psig (6.9×10⁶ Pa) and refrigerated overnight at 35°F (1.7°C). The cooled mixture was churned in a rotary baffled churn (30 r.p.m.) for ten minutes to produce a water-in-oil emulsified product. Excess liquid was drained and the product was washed and salted as in Example I. The margarine product produced in this manner was desirably uniform in texture and tightly emulsified.

**Claims**

1. A process for preparing a water-in-oil emulsion containing at least 70% fat by weight suitable for use as margarine or a butter substitute or spread, comprising:

(a) preparing an intimate mixture comprising melted fat, aqueous milk ingredients and an emulsifier component;

(b) homogenizing said mixture at a pressure of up to 3000 psig (20.7×10⁶ Pa) to form a liquid semi-stable oil-in-water emulsion therefrom containing from 30% to 60% fat by weight;

(c) cooling said semi-stable oil-in-water emulsion to below 50°F (10°C) while maintaining it in liquid form;

(d) subjecting said semi-stable oil-in-water emulsion to mechanical churning to effect inversion thereof to a water-in-oil emulsion containing at least 70% fat by weight, said semi-stable oil-in-water emulsion being sufficiently stable to withstand separation and phase inversion during storage and handling at temperatures of 50°F (10°C) or below prior to mechanical churning and to withstand phase inversion within the first five minutes of churning, and sufficiently unstable to undergo phase inversion in less than twenty minutes of churning, said churning periods being calculated on the basis of a rotational speed of the mechanical churn of 30 rpm; and

(e) removing excess free liquid from the water-in-oil emulsion.

2. A process according to claim 1 including the further steps:

(f) agitating said water-in-oil emulsion in the presence of added water at a temperature of less than 50°F (10°C); and

(g) removing excess free liquid from said water-in-oil emulsion to form a product containing at least 70% fat by weight.

3. A process according to claim 2 wherein said added water of step (f) is at a temperature below 40°F (4.4°C).

4. A process according to claim 3 wherein said agitation in the presence of added water is conducted in the mechanical churn, and wherein the outer surfaces of said churn are water cooled with water at a temperature of less than 40°F (4.4°C).

5. A process according to any preceding claim wherein said oil-in-water emulsion is cooled to below 40°F (4.4°C) prior to churning.

6. A process according to any preceding claim wherein said intimate mixture of melted fat, aqueous milk ingredients and emulsifier component is homogenized at a temperature of from 100°F to 160°F (37.8°C to 71.1°C).

7. A process according to any preceding claim wherein said homogenizing pressure is in the range of from 500 to 1000 psig (3.4 to 6.9×10⁶ Pa).

8. A process according to any preceding claim wherein said emulsifier component comprises lecithin.

9. A process according to any one of claims 1 to 7 wherein said emulsifier component comprises a mono- or di-glyceride.

10. A process according to any preceding claim wherein said emulsifier component comprises protein present as part of the aqueous milk ingredients.

11. A process according to any preceding claim, wherein the formulation of said intimate mixture and the conditions of homogenizing and churning are such that the fat content of said water-in-oil emulsion attributable to said phase inversion is substantially solely attributable to the separate melted fat component in said mixture.

12. A process according to claim 11 wherein said aqueous milk ingredient is essentially fat-free.

7

**0 139 398**

13. A process according to claim 12 wherein said aqueous milk ingredient is selected from skim milk, reconstituted non-fat milk solids, cultured, ripened and sweetened counterparts thereof, and mixtures of one or more of the foregoing ingredients.

14. A process according to claim 11 wherein said aqueous milk ingredient is a fat-containing oil-in-water emulsion which does not undergo phase inversion during said churning.

15. A process according to claim 14 wherein said aqueous milk ingredient is selected from whole milk, dairy cream, cultured, ripened and sweetened counterparts thereof, and mixtures of one or more of the foregoing ingredients.

16. A process according to any preceding claim wherein said water-in-oil emulsion contains at least 80% fat by weight.

17. A process for preparing margarine containing at least 80% fat by weight, comprising:

(a) preparing an intimate admixture of fat, aqueous milk ingredients and an emulsifier system in proportions which result in a mixture containing from 30% to 60% fat by weight;

(b) heating said admixture to a temperature above 130°F (54.5°C);

(c) cooling the admixture to between 100°F (37.8°C) and 110°F (43.3°C) and homogenizing said admixture at a pressure of less than 3000 psig (20.7×10⁶ Pa) so as to result in a homogenized, liquid semi-stable oil-in-water emulsion containing from 30% to 60% fat by weight;

(d) cooling said semi-stable oil-in-water emulsion to a temperature below 40°F (4.4°C) while maintaining said emulsion as a liquid;

(e) subjecting said semi-stable oil-in-water-emulsion to mechanical churning to effect inversion thereof to a water-in-oil emulsion containing at least 80% fat by weight, said churning being conducted for a period of time of from five to twenty minutes, relative to a rotational churn speed of 30 rpm, said semi-stable oil-in-water emulsion being sufficiently stable to withstand separation and phase inversion during storage and handling at temperatures of 50°F (10°C) or below prior to mechanical churning and to withstand phase inversion within the first five minutes of churning, and sufficiently unstable to undergo phase inversion in less than twenty minutes of churning, said churning periods being calculated on the basis of a rotational speed of the mechanical churn of 30 rpm;

(f) removing excess free liquid from the water-in-oil emulsion while said emulsion remains in the churn;

(g) agitating said water-in-oil emulsion in said churn in the presence of added water having a temperature below 40°F (4.4°C); and

(h) removing excess free liquid from said water-in-oil emulsion to form a margarine product containing at least 80% fat by weight.

## Patentansprüche

1. Verfahren zur Herstellung einer Wasser-in-öl-Emulsion enthaltend mindestens 70 Gew.% Fett geeignet für die Verwendung als Margarine oder als Butterersatz oder Aufstrich, umfassend:

(a) Herstellen einer innigen Mischung enthaltend geschmolzenes Fett, wässrige Milchbestandteile und eine Emulgiermittelkomponente;

(b) Homogenisieren dieser Mischung bei einem Druck von bis zu 3000 psig (20.7×10⁶ Pa) zur Herstellung einer flüssigen semistabilen Öl-in-Wasser-Emulsion enthaltend 30 bis 60 Gew.% Fett;

(c) Abkühlen dieser semistabilen Öl-in-Wasser-Emulsion auf weniger als 50°F (10°C), wobei diese in flüssiger Form gehalten wird;

(d) mechanisches Buttern dieser semistabilen Öl-in-Wasser-Emulsion, sodaß deren Inversion in eine Wasser-in-Öl-Emulsion enthaltend mindestens 70 Gew.% Fett bewirkt wird, wobei diese semistabile Öl-in-Wasser-Emulsion ausreichend stabil ist, um Trennung und Phaseninversion während der Lagerung, Behandlung bei Temperaturen von 50°F (10°C) oder weniger vor dem mechanischen Buttern und Phaseninversion innerhalb der ersten fünf Minuten des Butterns standzuhalten, und ausreichend unstabil ist, um beim Buttern von weniger als zwanzig Minuten eine Phaseninversion durchzumachen, wobei diese Schlagzeiten auf der Basis der Drehgeschwindigkeit des mechanischen Butterns bei 30 Umdrehungen pro Minute berechnet werden; und

(e) Entfernen der überschüssigen freien flüssigkeit aus der Wasser-in-Öl-Emulsion.

2. Verfahren nach Anspruch 1 umfassend die weiteren Schritte:

(f) heftiges Bewegen dieser Wasser-in-Öl-Emulsion in Gegenwart von beigemischtem Wasser bei einer Temperatur von weniger als 50°F (10°C); und

(g) Entfernen von überschüssiger freier Flüssigkeit aus dieser Wasser-in-Öl-Emulsion zur Herstellung eines Produktes enthaltend mindestens 70 Gew.% Fett.

3. Verfahren nach Anspruch 2, dadurch gekennzeichnet, daß das im Schritt (f) beigemischte Wasser eine Temperatur von weniger als 40°F (4,4°C) hat.

4. Verfahren nach Anspruch 3, dadurch gekennzeichnet, daß das heftige Bewegen in Gegenwart von beigemischtem Wasser in der mechanischen Buttermaschine erfolgt, und daß die Außenflächen dieser Buttermaschine mit Wasser bei einer Temperatur von weniger als 40°F (4,4°C) gekühlt werden.

5. Verfahren nach einem der vorhergehenden Ansprüche, dadurch gekennzeichnet, daß diese Öl-in-Wasser-Emulsion vor dem Buttern auf weniger als 40°F (4,4°C) abgekühlt wird.

**0 139 398**

6. Verfahren nach einem der vorhergehenden Ansprüche, dadurch gekennzeichnet, daß die genannte innige Mischung aus geschmolzenem Fett, wässrigen Milchbestandteilen und Emulgiermittelkomponente bei einer Temperatur von 100°F bis 160°F (37,8°C bis 71,1°C) homogenisiert wird.

7. Verfahren nach einem der vorhergehenden Ansprüche, dadurch gekennzeichnet, daß der Homogenisierdruck im Bereich von 500 bis 1000 psig (3,4 bis 6,9×10⁶ Pa) liegt.

8. Verfahren nach einem der vorhergehenden Ansprüche, dadurch gekennzeichnet, daß die genannte Emulgiermittelkomponente Lecithin umfaßt.

9. Verfahren nach einem der Ansprüche 1 bis 7, dadurch gekennzeichnet, daß die genannte Emulgiermittelkomponente ein Mono- oder Diglycerid umfaßt.

-10. Verfahren nach einem der vorhergehenden Ansprüche, dadurch gekennzeichnet, daß die genannte Emulgiermittelkomponente Protein enthalten als Teil der wässrigen Milchbestandteile umfaßt.

11. Verfahren nach einem der vorhergehenden Ansprüche, dadurch gekennzeichnet, daß die Formulierung der genannten innigen Mischung und die Bedingungen beim Homogenisieren und Buttern so sind, daß der Fettgehalt der durch die genannte Phaseninversion entstandenen Wasser-in-Öl-Emulsion im wesentlichen allein der getrennten geschmolzenen Fettkomponente in dieser Mischung zuzuschreiben ist.

12. Verfahren nach Anspruch 11, dadurch gekennzeichnet, daß der genannte wässrige Milchbestandteil im wesentlichen fettfrei ist.

13. Verfahren nach Anspruch 12, dadurch gekennzeichnet, daß der genannte wässrige Milchbestandteil aus Magermilche, rekonstituierten fettfreien Milchfeststoffen, gezüchteten, gereiften und gesüßten Gegenstücken derselben, und Mischungen aus einem oder mehreren der vorhergehenden Bedstandteile ausgewählt wird.

14. Verfahren nach Anspruch 11, dadurch gekennzeichnet, daß der genannte wässrige Milchbestandteile eine fetthältige Öl-in-Wasser-Emulsion ist, die während des Butterns keine Phaseninversion durchmacht.

15. Verfahren nach Anspruch 14, dadurch gekennzeichnet, daß der genannte wässrige Milchbestandteil aus Vollmilch, Rahm, gezüchteten, gereiften und gesüßten Gegenstücken derselben, und Mischungen aus einem oder mehreren der vorhergehenden Bestandteile ausgewählt wird.

16. Verfahren nach einem der vorhergehenden Ansprüche, dadurch gekennzeichnet, daß die genannte Wasser-in-Öl-Emulsion mindestens 80 Gew.% Fett enthält.

17. Verfahren zur Herstellung von Margarine enthaltend mindestens 80 Gew.% Fett, umfassend:

(a) Herstellen einer innigen Mischung aus Fett, wässrigen Milchbestandteilen und einem Emulgiersystem in einem Verhältnis aus dem eine Mischung enthaltend 30 bis 60 Gew.% Fett entsteht;

(b) Erhitzen der genannten Mischung auf eine Temperatur über 130°F (54,5°C);

(c) Abkühlen der Mischung auf 100°F (37,8°C) bis 110°F (43,3°C) und Homogenisieren der genannten Mischung bei einem Druck von weniger als 3000 psig (20,7×10⁶ Pa), sodaß eine homogenisierte, flüssige semistabile Öl-in-Wasser-Emulsion enthaltend 30 bis 60 Gew.% Fett entsteht;

(d) Abkühlen der genannten semistabilen Öl-in-Wasser-Emulsion auf eine Temperatur unter 40°F (4,4°C), wobei diese Emulsion in flüssiger Form gehalten wird;

(e) mechanisches Buttern der genannten semistabilen Öl-in-Wasser-Emulsion, sodaß deren Inversion in eine Wasser-in-Öl-Emulsion enthaltend mindestens 80 Gew.% Fett bewirkt wird, wobei dieses Buttern über einen Zeitraum von fünf bis zwanzig Minuten erfolgt, relativ zu einer Drehgeschwindigkeit der Buttermaschine von 30 Umdrehungen pro Minute, wobei die genannte semistabile Öl-in-Wasser-Emulsion ausreichend stabil ist, um Trennung und Phaseninversion während der Lagerung, Behandlung bei Temperaturen von 50°F (10°C) oder weniger vor dem mechanischen Buttern und Phaseninversion innerhalb der ersten fünf Minuten des Butterns standzuhalten, und ausreichend unstabil ist, um beim Buttern von weniger als zwanzig Minuten eine Phaseninversion durchzumachen, wobei diese Schalgzeiten auf der Basis der Drehgeschwindigkeit der mechanischen Buttermaschine von 30 Umdrehungen pro Minute berechnet werden;

(f) Entfernen von überschüssiger freier Flüssigkeit aus der Wasser-in-Öl-Emulsion während diese Emulsion in der Buttermaschine bleibt;

(g) heftiges Bewegen der genannten Wasser-in-Öl-Emulsion in der Buttermaschine in Gegenwart von beigemischtem Wasser mit einer Temperatur von weniger als 40°F (4,4°C); und

(h) Entfernen von überschüssiger freier Flüssigkeit aus der genannten Wasser-in-Öl-Emulsion zur Herstellung eines Margarineproduktes enthaltend mindestens 80 Gew.% Fett.

**Revendications**

1. Un procédé pour préparer une émulsion eau dans l'huile contenant au moins 70% en poids de graisse convenant à l'emploi comme margarine, succédané du beurre ou produit à tartiner, consistant à:

(a) préparer un mélange intime comprenant de la graisse fondue, des ingrédients aqueux du lait et un composant émulsifiant;

(b) homogénéiser ledit mélange à une pression d'au plus 3 000 psig (20,7×10⁶ Pa) pour former une émulsion huile dans l'eau liquide semi-stable contenant de 30% à 60% en poids de graisse;

9

(c) refroidir ladite émulsion huile dans l'eau semi-stable en dessous de 50°F (10°C) en la maintenant à l'état liquide;

(d) soumettre ladite émulsion huile dans l'eau semi-stable à un barattage mécanique pour en effectuer l'inversion en une émulsion eau dans l'huile contenant au moins 70% en poids de graisse, ladite émulsion huile dans l'eau semi-stable étant suffisamment stable pour résister à la séparation et à l'inversion de phase pendant le stockage et la manutention à des températures de 50°F (10°C) ou moins avant le barattage mécanique et pour résister à l'inversion de phase dans les cinq premières minutes du barattage, et suffisamment instable pour subir une inversion de phase en moins de vingt minutes de barattage, lesdites périodes de barattages étant calculées sur la base d'une vitesse de rotation du barattage mécanique de 30 tr/min; et

(e) éliminer l'excès du liquide libre de l'émulsion eau dans l'huile.

2. Un procédé selon la revendication 1 comprenant les étapes complémentaires consistant à:

(f) agiter ladite émulsion eau dans l'huile en présence d'eau ajoutée à une température inférieure à 50°F (10°C); et

(g) éliminer l'excès de liquide libre de ladite émulsion eau dans l'huile pour former un produit contenant au moins 70% en poids de graisse.

3. Un procédé selon la revendication 2 dans lequel ladite eau ajoutée de l'étape (f) est à une température inférieure à 40°F (4,4°C).

4. Un procédé selon la revendication 3 dans lequel ladite agitation en présence d'eau ajoutée est effectuée dans la baratte mécanique, et dans lequel les surfaces extérieures de ladite baratte sont refroidies par l'eau avec de l'eau à une température inférieure à 40°F (4,4°C).

5. Un procédé selon l'une quelconque des revendications précédentes dans lequel ladite émulsion huile dans l'eau est refroidie en dessous de 40°F (4,4°C) avant le barattage.

6. Un procédé selon l'une quelconque des revendications précédentes dans lequel ledit mélange intime de graisse fondue, d'ingrédients aqueux du lait et de composant émulsifiant est homogénéisé à une température de 100°F à 160°F (37,8°C à 71,1°C).

7. Un procédé selon l'une quelconque des revendications précédentes dans lequel ladite pression d'homogénéisation est dans la gamme de 500 à 1 000 psig (3,4 à 6,9×10⁶ Pa).

8. Un procédé selon l'une quelconque des revendications précédentes dans lequel ledit composant émulsifiant comprend de la lécithine.

9. Un procédé selon l'une quelconque des revendications 1 à 7 dans lequel ledit composant émulsifiant comprend un mono- ou diglycéride.

10. Un procédé selon l'une quelconque des revendications précédentes dans lequel ledit composant émulsifiant comprend la protéine présente comme partie des ingrédients aqueux du lait.

11. Un procédé selon l'une quelconque des revendications précédentes dans lequel la composition dudit mélange intime et les conditions d'homogénéisation et de barattage sont telles que la teneur en graisse de ladite émulsion eau dans l'huile attribuable à ladite inversion de phase est pratiquement uniquement attribuable au composant gras fondu séparé dans ledit mélange.

12. Un procédé selon la revendication 11 dans lequel le dit ingrédient aqueux du lait est essentiellement dépourvu de graisse.

13. Un procédé selon la revendication 12 dans lequel le dit ingrédient aqueux du lait est choisi parmi le lait écrémé, les matières sèches du lait dégraissé reconstitué, leurs équivalents cultivés, soumis à une maturation et édulcorés et des mélanges d'un ou plusieurs des ingrédients précédentes.

14. Un procédé selon la revendication 11 dans lequel le dit ingrédient aqueux du lait est une émulsion huile dans l'eau contenant des graisses, qui ne subit pas d'inversion de phase pendant ledit barattage.

15. Un procédé selon la revendication 14 dans lequel le dit ingrédient aqueux du lait est choisi parmi le lait entier, la crème laitière, leurs équivalents cultivés, soumis à une maturation et édulcorés et les mélanges d'un ou plusieurs des ingrédients précédents.

16. Un procédé selon l'une quelconque des revendications précédentes dans lequel ladite émulsion eau dans l'huile contient au moins 80% en poids de graisse.

17. Un procédé de préparation d'une margarine contenant au moins 80% en poids de graisse qui consiste à:

(a) préparer un mélange intime de graisse, d'ingrédients aqueux du lait et d'un système émulsifiant dans des proportions produisant un mélange contenant 30% à 60% en poids de graisse;

(b) chauffer ledit mélange à une température supérieure à 130°F (54,5°C);

(c) refroidir le mélange entre 100°F (37,8°C) et 110°F (43,3°C) et homogénéiser ledit mélange à une pression inférieure à 3 000 psig (20,7×10⁶ Pa) pour produire une émulsion huile dans l'eau liquide semi-stable homogénéisée contenant de 30% à 60% en podis de graisse;

(d) refroidir ladite émulsion huile dans l'eau semi-stable à une température inférieure à 40°F (4,4°C) en maintenant ladite émulsion à l'état liquide;

(e) soumettre ladite émulsion huile dans l'eau semi-stable à un barattage mécanique pour en effectuer l'inversion en une émulsion eau dans l'huile contenant au moins 80% en poids de graisse, ledit barattage étant effectué pendant une durée ce cinq à vingt minutes pour une vitesse de rotation de barattage de 30 tr/min, ladite émulsion huile dans l'eau semi-stable étant suffisamment stable pour résister à la séparation et à l'inversion de phase pendant le stockage et la manutention à des températures de 50°F (10°C) ou moins avant le barattage mécanique et pour résister à l'inversion de phase dans les cinq premières minutes de barattage, et suffisamment instable pour subir une inversion de phase en moins de vingt minutes de barattage, lesdites durées de barattage étant calculées sur la base d'une vitesse de rotation de la baratte mécanique de 30 tr/min;

(f) éliminer l'excès de liquide libre de l'émulsion eau dans l'huile alors que ladite émulsion demeure dans la baratte;

(g) agiter ladite émulsion eau dans l'huile dans ladite baratte en présence d'eau ajoutée ayant une température inférieure à 40°F (4,4°C); et

(h) éliminer l'excès de liquide libre de ladite émulsion eau dans l'huile pour produire une margarine contenant au moins 80% en poids de graisse.

11